# EUROPEAN PATENT SPECIFICATION

(11) **EP 1 726 344 B1**
(45) Date of publication and mention of the grant of the patent: **28.08.2013**
(21) Application number: 05719693.3
(22) Date of filing: 01.03.2005
(51) Int. Cl.: A63F 13/10, A63F 13/12

(54) **GAME SERVER SYSTEM, GAME ELEMENT PROVIDING METHOD, GAME DEVICE, AND PROGRAM PRODUCT**
SPIELE-SERVERSYSTEM, VERFAHREN ZUM BEREITSTELLEN VON SPIELEELEMENTEN, SPIELVORRICHTUNG UND PROGRAMMPRODUKT
SYSTEME DE SERVEUR DE JEUX, PROCEDE DE FOURNITURE D'ELEMENTS DE JEUX, DISPOSITIF DE JEU ET PRODUIT PROGRAMME

(30) Priority: 15.03.2004 JP 2004073561
(43) Date of publication of application: 29.11.2006
(73) Proprietor: Konami Digital Entertainment Co., Ltd., Tokyo 107-8324 (JP)
(72) Inventor: TERAO, Yukizumi c/o Konami Dig. Entert. Co., Ltd., Tokyo 107-8324 (JP); NAKAMURA, Masaru c/o Konami Dig. Ent. Co., Ltd., Tokyo 107-8324 (JP); TAMURA, Ryuta c/o Konami Dig. Ent. Co., Ltd., Tokyo 107-8324 (JP); KOBAYASHI, Kenji c/o Konami Dig. Ent. Co., Ltd., Tokyo 107-8324 (JP); SATO, Yukihiro c/o Konami Dig. Ent. Co., Ltd., Tokyo 107-8324 (JP); KITAGAWA, Atsushi c/o Konami Dig. Ent. Co., Ltd., Tokyo 107-8324 (JP); MIYAZAKI, Masato c/o Konami Dig. Ent. Co., Ltd., Tokyo 107-8324 (JP); YOSHIDA, Katsutoshi c/o Konami Dig. Ent. Co., Ltd., Tokyo 107-8324 (JP); SEINO, Sachiko c/o Konami Dig. Entert. Co., Ltd., Tokyo 107-8324 (JP)
(74) Representative: Winter, Brandl, Fürniss, Hübner, Röss, Kaiser, Polte - Partnerschaft
(86) International application number: PCT/JP2005/003376
(87) International publication number: WO 2005/087335

(56) References cited:
- EP-A2- 1 029 571
- JP-A- 11 290 552
- JP-A- 2002 073 561
- US-A1- 2001 049 297
- US-B1- 6 338 680
- 'Kabushiki Kaisha Kyubisuto Virtua Fighter 4 Evolution Perfect Guide.', 04 October 2002, SOFTBANK PUBLISHING INC., ISBN 4-7973-2182-2 pages 8 - 22, XP002992453

## Description

The present invention relates to a game server system, a game element providing method, a game device, and a program product.

There is known a network-type game system enabling more than one arcade game devices connected to one another via a network to operate under a server's control (disclosed in Japanese Patent Laid-Open Publication 3466596 and 3495032). A system has also been proposed that allows a player to enjoy a continuation of a game stopped in its halfway, in which system an information processing device capable of performing mobile communication such as a portable phone terminal, a home game device, or a commercial game device is enabled to access intermediate result information of a game registered at a host computer, and to utilize the intermediate result information of the game at an information processing device (disclosed in Japanese Patent Application Laid-Open Publication H11-290552).

However, in a technique disclosed in Japanese Patent Application Laid-Open Publication H11-290552, it is a host computer where intermediate game result information is registered, and therefore, a game player is not able to freely edit intermediate game result information. Conventionally, for example, a game player is not allowed to freely edit a game element such as music pieces used in a game. In a case of an arcade game, in particular, it would be convenient if a game player is allowed to edit a game element without traveling to a game arcade (game center).

US 6 338 680 B1 relates to a system and method for transferring game saves between a game console and a personal computer. The system includes a game save editor that allows a user to edit game saves stored in a memory of a computer. The game console and the computer are directly connected by means of a cable connected to a game system memory card including a connector for connection to the personal computer.

EP 1 177 822 A1 discloses a game system wherein, using terminal apparatuses connected to a server by a network, original characters are trained by the game players executing a character training game, and data relating to those original characters are stored in a database in the server. When two or more game players directly contest the same game in real time via the network, data relating to the original characters of the game players stored in the database are downloaded to the terminal apparatuses and used as character data.

US 2002/0029336 A1 discloses an authentication method wherein an information processing center correlates and stores a communication terminal ID assigned uniquely to each communication terminal used by a user and a user ID assigned uniquely to each user attempting to access. User information is stored correlated with the user ID. Then, the user is identified based on the communication terminal ID received by the information processing center.

The present invention has been made in view of the problems stated above, and provides a game server system allowing a game player to freely edit a game element free from time and place constraints, a related game element providing method, game device, and program product.

The invention provides a game server system as defined in claims 1, 2 or 3. Further a game element providing method is defined in claim 4.

In the following, a description will be given of the present invention. It is to be noted that reference numerals of attached drawings are shown in parenthesis to promote understanding of the present invention but not to limit the present invention to embodiments as shown in the drawings.

According to the game server system (10) of the present invention, upon receiving, from one of information processing devices (26), an information-processing-device-registration request indicating an information-processing-device identifier unique to the information processing device and one of player-correspondent identifiers, an information-processing-device registrar (30) stores in storage (32) the information-processing-device identifier and the player-correspondent identifier in association with each other. Thus, correspondence between an information processing device (26) and a player can be recognized in the gamer server system (10).

When element-specifying information that has been edited by each player using one of the information processing devices (26) is received from the information processing device (26), element-specifying-information registrar (30) stores in storage (32) the element-specifying information in association with the information-processing-device identifier and a player-correspondent identifier. Therefore, correspondence between an information processing device (26), a player, and element-specifying information edited by a player can be recognized in the game server system (10).

As a result, upon receiving a player-correspondent identifier from one of game devices (18), the element-specifying-information supplier (30) can specify element-specifying information in association with the player-correspondent identifier, read the element-specifying information from storage (32), and supply the element-specifying information with the game device (18) for use by a game player who has edited the element-specifying information. The game device (18) then executes a game using a game element specified by the eiement-specifying information. In other words, a game player can enjoy at a game device (18) a game in accordance with the element-specifying information edited using an information processing device (26).

Thus, an information processing device (18) which is different from game device (18) can be used for a game player to edit a game element, and therefore, a game player can freely edit, i.e., customize, a game element free from place and time constraints.

In this specification, description is given of game music as an example of a game element, but it is not intended to limit the present invention thereto, and a game element can be of any other type. For example, a game element can be a parameter showing a level of difficulty of a game, a parameter for setting a game character appearing in plays of a game, a parameter setting an ability of a game character, and/or a parameter for setting a background screen. Game music pieces may be those used in a music simulation game in which a game player plays a music piece using an input device so as to accord with instructions presented on a game device and scores are determined on the basis of a degree of correspondence between the music piece actually played by the player and the instructions given by the game device. Alternatively, game music pieces may be those used as background music in other types of games.

Game server system (10) may be comprised of one server or alternatively be a distributed system comprised of a plurality of servers (12, 14). Game server system (10) may use the same communication network and the same communication interface to communicate with an information processing device (26) and a plurality of game devices (18), or alternatively use different communication networks depending on types of devices and separate communication interfaces for each communication network.

A game device is preferably an arcade game device. An information processing device is a mobile communication terminal using wireless communication such as a portable phone terminal and a PHS (Personal Handy-phone system) terminal.

According to the present invention, the player-correspondent identifier corresponding to one of said game players includes one player identifier and one or more recording-medium identifiers. The player identifier identifies each of said game players, and the recording-medium identifier identifies each of portable recording media (28) that can be carried by each of said game players. In said storage (32), a player identifier and a recording-medium identifier corresponding to the player identifier may preferably be stored in association with each other. Preferably, the game server system (10) may further comprise a recording-medium-identifier-candidate presenter (30) that, upon receiving an access request indicating an information-processing-device identifier from one of said information processing devices (26), with its information-processing-device identifier having been stored in said storage (32) by said one information-processing-device registrar (30), transmits, to said one information processing device (26), one or more recording-medium identifiers being player-correspondent identifiers associated with said information-processing-device identifier. In this case, said element-specifying-information registrar (30), upon receiving, from said information processing device (26), a recording-medium-specification notification and element-specifying information, may store said element-specifying information in association with a recording-medium identifier selected from among said one or more recording-medium identifiers notified by said recording-medium-ideniifier-candidate presenter (30) and specified in said recording-medium-specification notification; and said element-specifying-information supplier (30), upon receiving from one of said game devices (18) a recording-medium identifier of a portable recording medium (28), may transmit to said one game device (18) element-specifying information associated with said recording-medium identifier, said recording-medium identifier being read by said one game device (18) before a game player plays a game at said one game device (18).

In this case, a player is able to possess not only a player identifier indicating him/herself but also one or more recording-medium identifiers corresponding to one or more recording media (28). Since a player identifier and its corresponding recording-medium identifier(s) are stored in the storage (32) in association with each other, the correspondence therebetween can be recognized in the game server system (10).

When an access request indicating an information-processing-device identifier is received from an information processing device (26) whose information-processing-device identifier has been stored, a recording-medium-identifier-candidate presenter (30) transmits in return to the information processing device one or more recording-medium identifiers being player-correspondent identifiers associated with the information-processing-device identifier. Based on candidate(s) for a recording-medium identifier(s) presented by the recording-medium-identifier-candidate presenter (30), a game player can readily select, using the information processing device (26), a portable recording medium (28) corresponding to element-specifying information which s/he wishes to edit, from a plurality of portable recording media (28) of his/her own. The information processing device (26), in response to the selection, transmits to the game server system (10) a recording-medium-specification notification specifying one recording-medium identifier.

Upon receiving the recording-medium-specification notification and element-specifying information from the information processing device (26), the element-specifying-information registrar (30) stores in the storage (32) the element-specifying information in association with a recording-medium identifier specified by the recording-medium-specification notification. As a result, correspondence between a portable recording medium (28) and element-specifying information edited by a player can be recognized in the game server system (10). Therefore, element-specifying information edited by a game player can be readily notified to the game server system (10) by causing a game device (18) to read' a recording-medium identifier of a portable recording medium (28), without the game player's having to input the identifier into game device (18). The element-specifying-information supplier (30) is then enabled to transmit, to the game device (18), element-specifying information that is in association with the recording-medium identifier.

Thus, a single game player is able to possess a plurality of portable recording media (28) and also to edit using an information processing device (26) a plurality of element-specifying information sets respectively corresponding to the portable recording media. A game player, at a game device (18), can select one of a plurality of portable recording media (28) of his/her own, and enjoy a game according to element-specifying information corresponding to the selected recording medium.

The portable recording medium (28) may be, for example, any one of an information recording card, an information recording disk, and an information recording stick. A read/write system may be either contact or contactless, and further, may be one of magnetic, electromagnetic-inductive, or optical systems.

The game server system may comprise an element candidate provider (30) that provides, in response to a request received from one of said information processing devices (26), to said one information processing device (26), element-candidate-specifying information specifying candidates for a game element to be selected by a game player. In this case, the element-candidate-specifying information enables a game player to readily select one of candidates for a game element and to edit element-specifying information.

### EFFECTS OF INVENTION

According to the present invention, a game player is allowed to select a game element using an information processing device which is a different device than a game device, thereby to freely edit, i.e., customize, a game element, being free from time and place constraints. Since a game element can be edited prior to actually operating a game device, a game can be instantaneously started when playing the game using the game device. Therefore, a game player can immediately enjoy a game per se. Further, since a game element can be edited without using a game device, the game device can be operated at a higher efficiency.

### BRIEF DESCRIPTION OF DRAWINGS

Fig. 1 is a block diagram showing a configuration of a communication system having a game server system according to a first embodiment of the present invention.
Fig. 2 is a block diagram showing a configuration of a game device of the communication system shown in Fig. 1.
Fig. 3 is a block diagram showing a configuration of a host server of the communication system shown in Fig. 1.
Fig. 4 is an explanatory diagram showing a data structure of a database stored in the host server shown in Fig. 3.
Fig. 5 is a sequence chart showing procedures of a card registration process executed in the communication system shown in Fig. 1.
Fig. 6 is a sequence chart showing procedures of a download process executed in the communication system shown in Fig. 1.
Fig. 7 is a sequence chart showing procedures of a course data edit process executed in the communication system shown in Fig. 1.
Fig. 8 is a sequence chart showing procedures of a play process executed in the communication system shown in Fig. 1.
Fig. 9 is a flow chart showing procedures executed at a game device shown in Fig. 2.
Fig. 10 is a flow chart showing procedures of an application program executed at a mobile communication terminal in the communication system shown in Fig. 1.
Fig. 11 is an explanatory diagram showing example screens for selecting a card name at the mobile communication terminal.
Fig. 12 is an explanatory diagram showing example screens for editing a course at the mobile communication terminal.
Fig. 13 is a flow chart showing procedures executed at the host server of the communication system shown in Fig. 1.
Fig. 14 is a sequence chart showing procedures of a game server system according to a second embodiment of the present invention.

### BEST MODE FOR CARRYING OUT THE INVENTION

### 1. First Embodiment

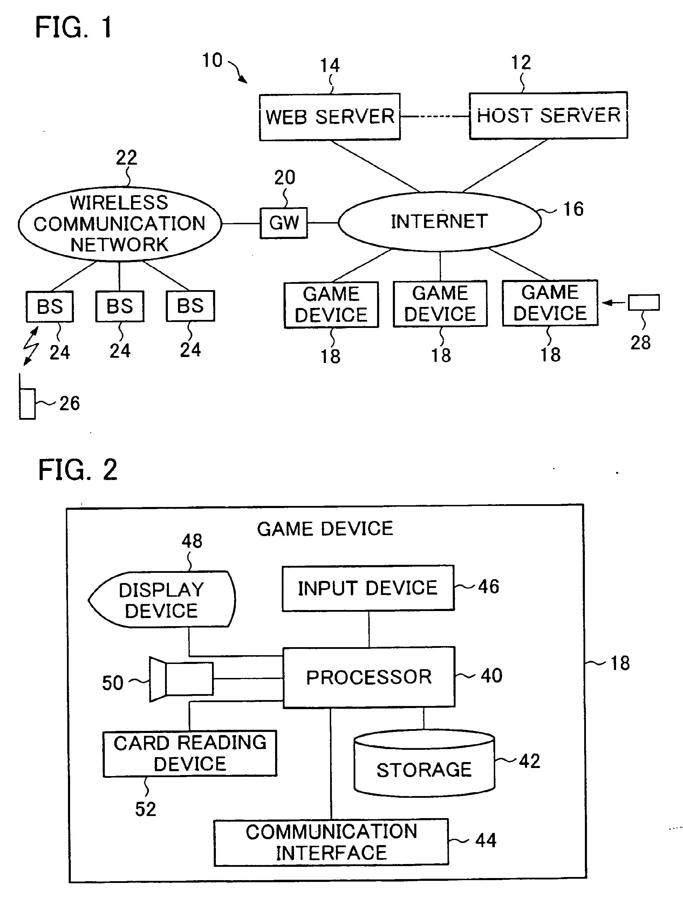

Fig. 1 is a communication system comprising a game server system according to an embodiment of the present invention. As shown in Fig. 1, a game server system 10 has a host server 12 and a web server 14. Host server 12 and web server 14 are connected to an identical communication network, for example, an Internet 16. Host server 12 communicates with a variety of devices using SOAP (Simple Object Access Protocol), whereas web server 14 is dedicated to a mobile Internet access service and communicates with a plurality of mobile communication terminals (information processing devices; hereinafter referred to as "MS"s) 26. The "mobile Internet access service" refers to a service under which an interactive communication is enabled between mobile communication terminals such as portable phones and Internet sites, so that a mobile communication terminal can display characters and images provided by an Internet site on its display, download an application program from a site, and the like. Examples of such a mobile Internet access service include an "i-mode®" developed by NTT DoCoMo, Inc., (Tokyo, Japan) and a service compliant with "WAP (Wireless Application Protocol)" developed by the WAP Forum.

Web server 14 is capable of, in response to a request from MS 26, downloading to MS 26 an application program for MSs. Such application programs that can be downloaded through a mobile Internet access service for execution in a MS of this type include, for example, i-appli® for an i-mode compatible MS, an application program that operates on a MS compliant with BREW® (Binary Runtime Environment for Wireless) developed by Qualcomm Incorporated (San Diego, CA, USA), and an application program that operates on a MS compliant with MIDP (Mobile Information Device Profile) for use under J2ME® CLDC (Java 2 Micro Edition Connected Limited Device Configuration).

Connected to the Internet 16 are a large number of game devices 18, where the connection may be either direct or via an arcade server (not shown), thereby to enable host server 12 to communicate with a large number of game devices 18. As is described later in the description, each game device 18 reads a card ID (recording-medium identifier) stored in an information recording card (portable recording-medium; hereinafter referred to as a "card") 28 that is carried by a game player, the card ID then being transmitted to host server 12. Host server 12 in return transmits game information corresponding to the card ID. Game device 18 allows the game player to play a game in accordance with the game information.

Game server system 10 according to the present embodiment has host server 12 and web server 14, but it is not intended to limit the present invention to this embodiment. Only one server may be used to bear the functions of both host server 12 and web server 14; alternatively, server 12 and 14 each may be comprised of a plurality of servers. For example, host server 12 may have a game server and a center server, the former performing communication relating only to one game and the latter controlling the game server and providing other communication services. Also, as shown by a phantom line, host server 12 and web server 14 may directly communicate with each other.

The Internet 16 is connected to a wireless communication network 22 via a gateway (GW) 20. GW 20 has a function of converting a protocol used in wireless communication network 22 into another protocol used in the Internet 16, and vice versa, to thereby actualize smooth communication between wireless communication network 22 and the Internet 16. Specifically, GW 20 is, for example, an i-mode server for an i-mode service, or a WAP proxy (WAP gateway) for a WAP service. Connected to wireless communication network 22 are a number of base stations (BS) 24, through one of which BSs 24, a MS 26 is enabled to communicate with a communication device connected to wireless communication network 22 and the Internet 16. MS 26 is thus able to communicate with both host server 12 and web server 14. However, MS 26 is only capable of reproducing an image provided from web server 14 to be displayed on its display but not capable of directly displaying information provided from host server 12 without use of an application program for MSs installed in MS 26. As will be discussed later, the application program, when installed on MS 26, operates according to signals received from host server 12, to thereby control an image displayed on a display of MS 26.

Fig. 2 shows a configuration of game device 18. As shown in Fig. 2, game device 18 has a processor (communicator; receiver; game executer; registration requester) 40, a storage 42, a communication interface (receiver) 44, an input device 46, a display device 48, a speaker 50, and a card reading device (reader) 52. Game device 18 according to the present embodiment provides a music simulation game where a game player actually plays a music piece using input device 46 to accord with instructions presented on display device 48 and his/her score will be decided based on a degree of correspondence between the music actually played by the player and the instructions on display device 48. Stored in storage 42 are data relating to a number of music pieces to be displayed as moving images on display device 48 and reference data to be compared with a performance of a game player. Input device 46 may be, for example, a plurality of buttons, or an input device mimicking a musical instrument such as an electric guitar or drums. Input device 46 generates input signals in accordance with operations made by a game player.

Processor 40 displays, on display device 48, moving images of instructions to be given to a game player based on a display data unit read from storage 42. Processor 40 also drives speaker 50 based on input signals input from input device 46 or reference data read from storage 42, compares the input signals with the reference data, and gives scores on the basis of results of the comparison.

Game device 18 has at least two game modes (normal or expert mode) to be selected by a player. In the normal mode, a list of music pieces stored in storage 42 is displayed on display device 48 before start of a game, and a game player is allowed to specify using input device 46 any two music pieces. Processor 40 executes a music simulation game using the two pieces specified by a game player.

In the expert mode, a plurality of serial music pieces (for example, 4 music pieces) is provided to a player during one play period. The play period is a period from a start to an end of a game in a case that a player has cleared all of the music pieces. In the expert mode, however, if a player's points are deducted to reach a threshold, a game is forcibly terminated even before the play period expires. A combination and a playing order of music pieces are collectively referred to as a procedure (course). Data specifying a course is referred to as a course data set, where, more specifically, the course data set specifies identifiers of a plurality of music pieces and a playing order of these pieces.

In the expert mode, a game player is allowed to select a course before the game starts. In a case that a game player does not use the above described card 28, s/he is allowed to select a course only from prepared courses. Course data sets for a large number of courses are stored in advance in storage 42. A game player selects a desired course, using input device 46, from among candidates for courses displayed on display device 48 based on the course data sets (element-specifying information).

On the other hand, in a case that a game player uses card 28, the game player is allowed to conduct game music pieces in accordance with a course the player him/herself has edited. Card reading device 52 reads a card ID recorded in card 28 and conveys the card ID to processor 40. Processor 40 uses communication interface 44 to notify the card ID to host server 12, and host server 12 in return transmits, to game device 18, a course data set exclusively for a game player corresponding to the card ID. As will be described later in the specification, a course data set supplied from host server 12 is edited by a game player him/herself. Processor 40 analyzes the course data set received by communication interface 44, and provides a game where music pieces specified by the course data set are conducted in an order designated in the course data set.

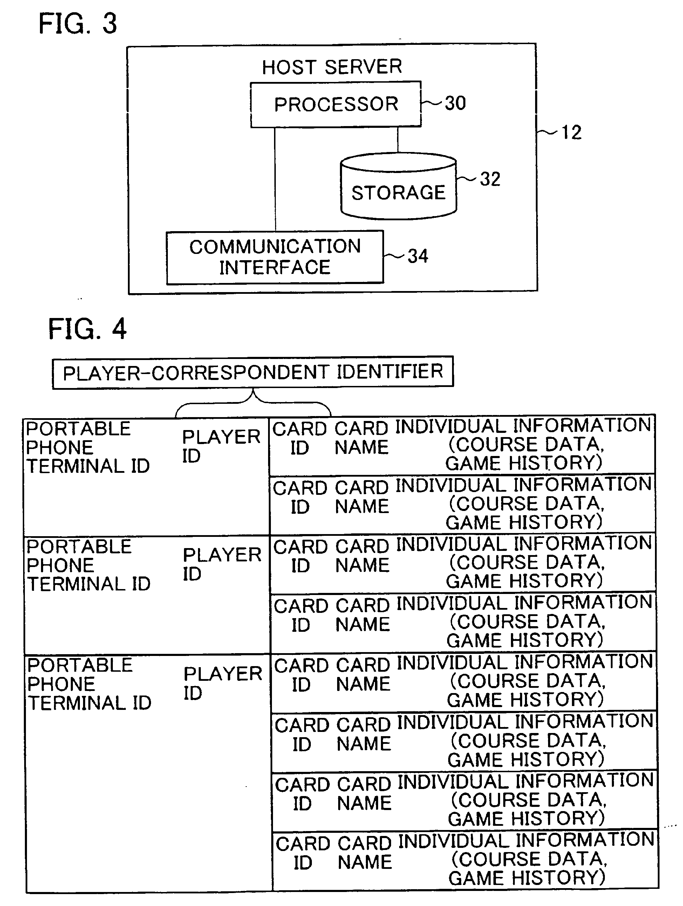

As shown in Fig. 3, host server 12 has a processor (information-processing-device registrar; element-specifying-information registrar; element-specifying-information supplier; recording-medium-identifier-candidate presenter; element candidate provider) 30, a storage 32, and a communication interface 34. Processor 30 writes/reads data into/from storage 32, and performs communication via communication interface 34. There is stored in storage 32 a database including a collection of various information sets relating to a plurality of game players who use game devices 18 (for example, player-correspondent identifiers and a course data set corresponding to each of the players). Communication interface 34 converts signals to enable communication with the Internet 16.

When a course data set is received at host server 12 from MS 26 by communication interface 34, processor 30 stores the course data set in storage 32 in association with a player-correspondent identifier (a player ID and a card ID, described later) corresponding to the game player the course data set showing edited results of procedures of game music pieces edited by a game player using one of MSs 26. On the other hand, when a player-correspondent identifier is received by communication interface 34 from game device 18, processor 30 reads from storage 32 a course data set associated with the player-correspondent identifier to transmit, to game device 18, the course data set via communion interface 34. Game device 18 is thus enabled to execute a game where game music pieces are conducted in a procedure in accordance with a course data set edited at MS26 which is a different information processing device than game device 18.

Player-correspondent identifiers and a course data set are associated with each other using a database accumulated in storage 32. Fig. 4 shows an overview of what is stored in the database. In Fig. 4, a "portable phone terminal ID" (hereinafter referred to as "terminal ID") is an identifier unique to MS 26 (information-processing-device identifier), which is notified by each MS 26 for registration in the database.

The player-correspondent identifier includes a "player ID" (player identifier) and a card ID (a card identifier which is a recording-medium identifier). The player ID corresponds uniquely to an individual player. That is, the player ID is an only ID exclusively for use by each player, and registered in a database by a game operator using a registration device (not shown) that is a different device than game device 18 and MS 26. The card ID is an identifier stored in card 28 and unique to card 28. Since one game player is allowed to carry one or more card 28, one or a plurality of card IDs are associated with one player ID.

For registration of a card ID, processor 30, in response to a registration request indicating a card ID and a player ID, stores the player ID and the card ID in storage 32. When communication interface 34 receives from one of MSs 26 a second registration request showing a player ID input in MS 26 and a terminal ID unique to MS 26, processor 30 stores in storage 32 the terminal ID and the player ID in association with each other. Thus, card IDs readable by game device 18 and a terminal ID unique to MS 26 are associated through a player ID.

In Fig. 4, "individual information" is an information set for each card and includes a course data set and a game history (for example, a number of times a game is played using the course and score history) in the course. A single game player is allowed to edit as many courses as a number of cards independently from one another, and to enjoy a plurality of courses at game device 18.

A "card name" is a nickname, given by each game player, of a card of his/her own. When a game player uses MS 26 to edit a course or view a game history, the "card name" can be used to readily specify which card a course s/he wishes to edit corresponds to and which card a game history s/he wishes to view corresponds to.

Description will be next given of operations performed in the communication system. The communication system, game server system 10 in particular, executes a card registration process, a downloading process, a course data edit process, and a play process.

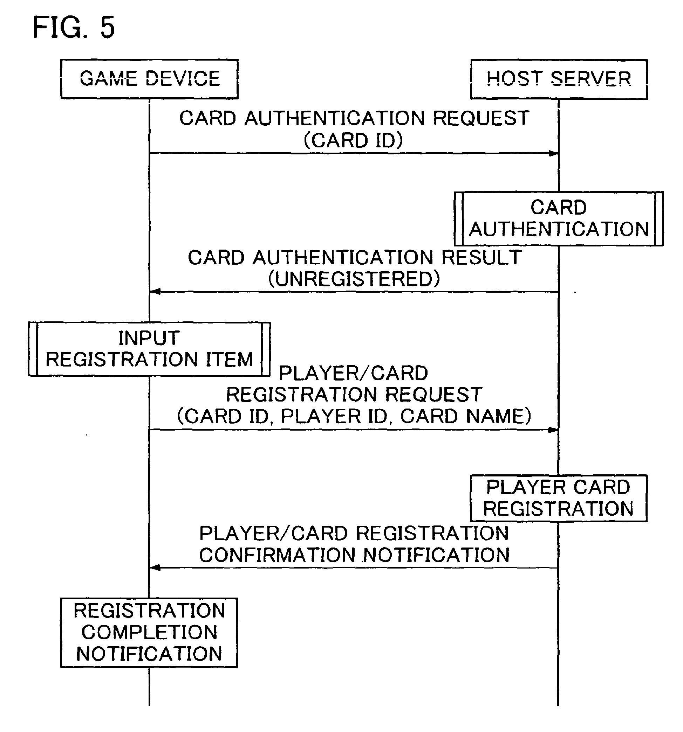

Fig. 5 shows an example of procedures of the card registration process. In this embodiment, an example will be given of a case where game device 18 provides host server 12 with information to be registered, although, in the card registration process, game device 18 is not necessarily used and another device for registration may be used to provide host server 12 with information to be registered.

When a player inserts card 28 into game device 18, card reading device 52 of game device 18 reads a card ID recorded in card 28. Game device 18 then issues a card authentication request containing the card ID, for transmission to host server 12.

Host server 12 executes a card authentication process. In the card authentication process, a database stored in storage 32 is referred to, to determine whether the card ID contained in the card authentication request has already been registered. Host server 12 transmits to game device 18 a result of the card authentication. There is included, in the result of the card authentication, information showing whether card 28 inquired about is registered or unregistered.

In a case that the result of card authentication shows that card 28 in question is unregistered, game device 18 executes an input process of inputting items to be registered. In the input process, game device 18 displays a registration screen prompting input of a player ID and a card name. When the input by a player using input device 46 is completed, game device 18 transmits to host server 12 a player/card registration request to game device 18. The player/card registration request contains a card ID, a player ID, and a card name.

Host sever 12, upon receiving the player/card registration request, executes a player/card registration process. In the process, host server 12 stores in the database the card ID, the player ID, and the card name in association with one another. Host server 12 then transmits to game device 18 a player/card-registration-confirmation notification. Game device 18, upon receiving the player/card-registration-confirmation notification, executes a registration completion notification process. In the process, game device 18 displays on display device 48 a message informing that the registration is completed.

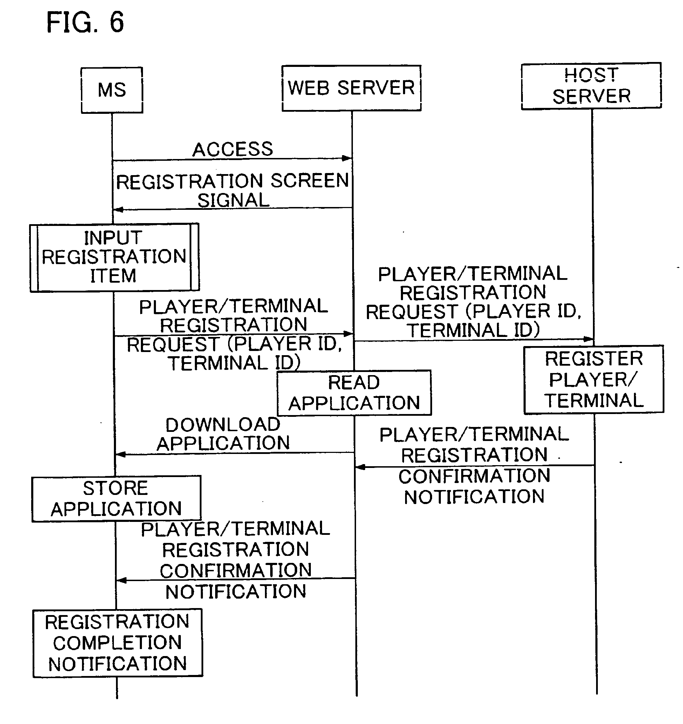

Fig. 6 shows procedures of a downloading process. When a player operates MS 26 to access web server 14, web server 14 in return transmits to MS 26 a registration screen signal. MS 26 displays on its display a registration screen based on the registration screen signal, to prompt the player to input items to be registered including a player ID. When the input by the player is completed, MS 26 in return transmits to web server 14 a player/terminal registration request (information-processing-device-registration request). The player/terminal registration request contains a terminal ID as well as a player ID. The terminal ID is identification information for uniquely identifying MS 26 and is stored in a memory of MS 26.

The player/terminal registration request is transferred from web server 14 to host server 12 where a player/terminal registration process is performed. In the process, the player ID and the terminal ID are stored in association with each other. As a result, as described above, the terminal ID, the player ID, and the card ID are associated with one another. Web server 14 reads an application program for MS, and transmits the application program to MS 26. The application program contains screen information for selecting music pieces, a URL (Uniform Resource Locator) of host server 12, and the like. MS 26 stores the application program in its memory that is nonvolatile.

When the player/terminal registration process is completed at host server 12, host server 12 issues a player/terminal-registration-confirmation notification for transmission to web server 14. Web server 14 in response generates a player/terminal-registration-confirmation notification containing image data that can be displayed on a display of MS 26, for transmission to MS 26. MS 26, upon receiving the player/terminal-registration-confirmation notification, displays on its display a message showing that the registration is completed.

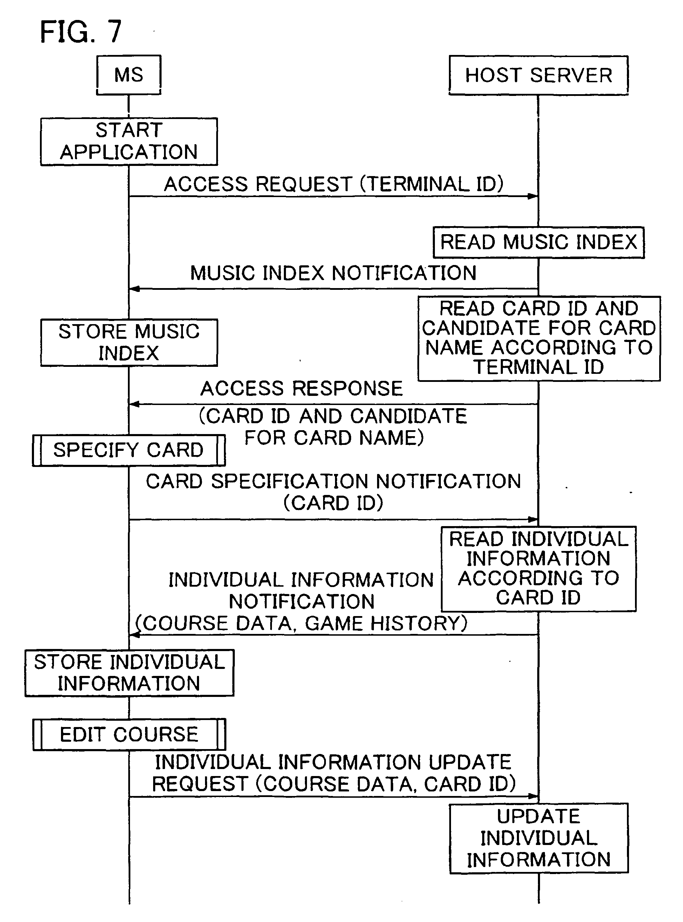

Fig. 7 shows procedures of a course data edit process. When a player first operates input buttons of MS 26 to activate the application program, MS 26 transmits an access request to host server 12 using the URL of host server 12 contained in the application program. Host server 12, upon receiving the access request, reads a music index and transmits the index to MS 26. The music index is information, such as titles of music pieces, used for designating a plurality of music data units stored in game device 18. MS 26, upon receiving a music index notification containing the music index, stores the music index in the nonvolatile memory. The process of downloading the music index from a host computer is executed only when the application program is activated for the first time. Thus, there is no need to download the music index every time the application program is activated, and therefore, a communication resource is saved, and a user of MS 26 can start editing of a course data set within a short period.

Host server 12 refers to the database stored in storage 32, to read a card ID corresponding to a terminal ID contained in the access request and a candidate(s) for a card name. As described above, there are stored in host server 12 player IDs, terminal IDs, card IDs, and card names in association with one another. In a case that a player owns more than one card 28, a plurality of pairs of a card ID and a card name is associated with a single terminal ID. In such a case, host server 12 reads a plurality of pairs of a card ID and a card name, and transmits in return to MS 26 an access response containing the plurality of pairs of a card ID and a card name.

MS 26, upon receiving the access response, executes a card specifying process. In the process, MS 26 displays on its display a plurality of card names contained in the access response, for prompting a player to select one of the card names, which is an action of the application program. When the player operates an input button of MS 26 to specify a card name, MS 26 transmits to host server 12 a card specification notification. The card specification notification contains a card ID corresponding to the card name specified by the player.

Host server 12, upon receiving the card specification notification, refers to the database, to read individual information corresponding to the card ID contained in the card specification notification and transmit in return to MS 26 an individual information notification. The individual information contains a course data set and a game history.

MS 26, upon receiving the individual information notification, stores the notification in its memory. MS 26 then executes a course edit process. In the course edit process, a course data set is generated which specifies a plurality of music pieces (for example, 4 pieces). The course data set contains music specification data containing titles of first to fourth music pieces and designating a playing order of the music pieces.

When the course edit process is completed, MS 26 transmits to host server 12 an individual-information-update request. The individual-information-update request contains a card ID and a course data set. Host server 12, in accordance with the course data set contained in the individual-information-update request, updates individual information stored in the database. Host server 12 identifies individual information associated with the card ID, and the updating of the identified individual information is executed.

Use of the above application program allows a player to specify music pieces constituting a course using MS 26. There are stored in game device 18 data of hundreds of music pieces so as to meet various needs of players. It often takes a long time for a player to search for favorite music pieces and decide the order of the selected pieces. Further, there are often queues of people in front of a popular game device 18. In such a situation, a player might feel pressured to occupy game device 18 for editing a course, with consideration for other players waiting in a queue. Such a situation also causes game device 18 to operate at low capacity. However, since the editing of a course using the application program allows a player to specify a set of music pieces without operating game device 18, a player does not need to feel pressured with considerations for others waiting in a queue, and operation rates of game device 18 are raised. Further, since MS 26 is used to edit a course, the editing can be performed regardless of time and place; a player is allowed to edit a course at any place in his/her free time, prior to playing a game.

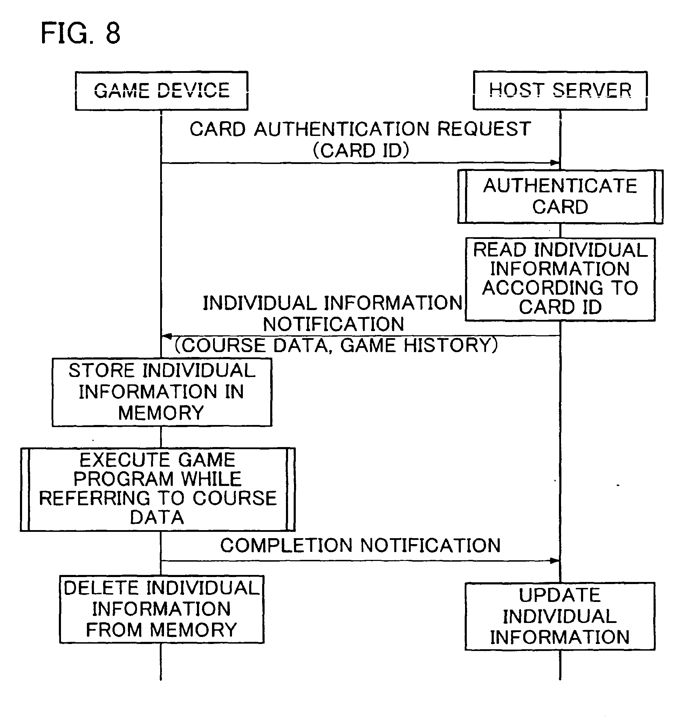

Fig. 8 shows procedures of a play process. When a player inserts card 28 into game device 18, game device 18 reads a card ID stored in card 28 for transmission to host server 12. Host server 12 executes card authorization. Subsequently, host server 12 refers to a database to read individual information stored in association with the card ID. Host server 12 then transmits an individual information notification containing the individual information. The individual information contains a course data set and a game history.

Game device 18, upon receiving an individual information notification, stores the individual information in a memory (not shown) attached to processor 40. Game device 18, while referring to a course data set stored in the memory, executes a game program. Specifically, when an expert mode is selected by a player, game device 18 displays on display device 48 a course (a series of music pieces) designated by a player-customized course data set together with prepared course, to prompt the player to specify one of the courses. When the player selects a course using input device 46, specified music pieces are played according to an order specified by the a course data set. When the game is completed, game device 18 transmits a completion notification to host server 12. The completion notification contains information of a game history showing selected music pieces and points. Host server 12, upon receiving the completion notification, executes the updating of individual information based on the game history contained in the completion notification. Game device 18, after transmitting the completion notification, deletes the individual information from its memory.

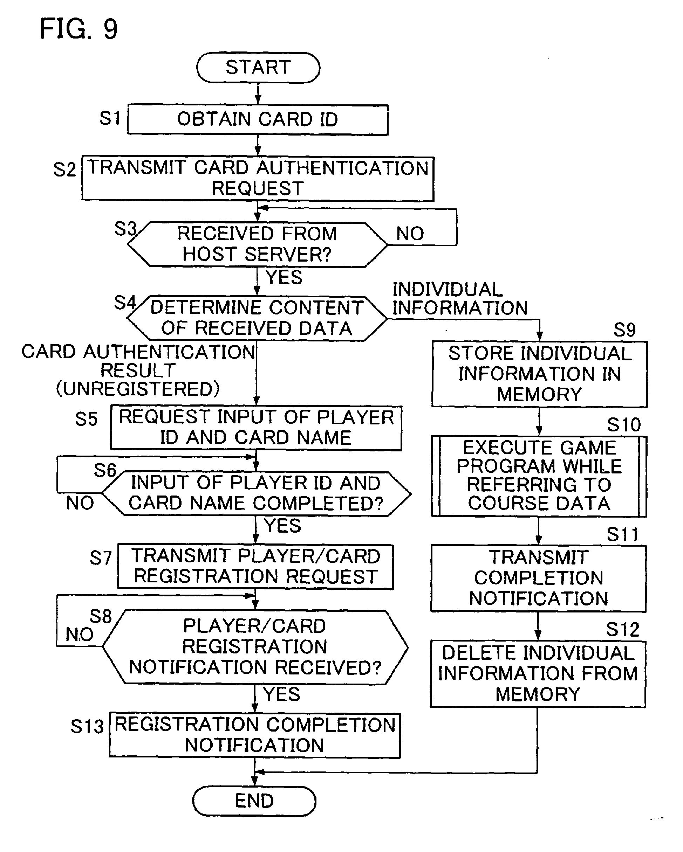

Description will be next given of processes executed at game device 18, MS 26, and host server 12, where the description will be given separately for each device. Fig. 9 is a flowchart showing procedures performed at game device 18. When a player inserts card 28 into card reading device 52, processor 40 obtains a card ID output from card reading device 52 (Step S1). Processor 40 then generates a card authentication request containing the card ID, for transmission to host server 12 (Step S2). Subsequently, processor 40 determines whether information is received from host server 12 (Step S3), and the determination is repeated until information is received.

When information is received at game device 18, processor 40 performs determination on content of the received information (Step S4). Specifically, it is determined whether an authentication result of the card as being unregistered or individual information is received. In a case that an authentication result of the card as being unregistered is received, processor 40 proceeds to Step S5. In Step S5, processor 40 displays on display device 48 a screen prompting a player to input- a player ID and a card name. Processor 40 then determines whether the input of the player ID and the card name is completed (Step S6), and repeats the determination until the input is completed.

When a player operates input device 46 to complete the input, processor 40 transmits to host server 12 a player/card registration request (Step S7). The player/card registration request contains the player ID and the card name. Processor 40 then determines whether a player/card registration notification is received (Step S8), and the determination is repeated until the notification is received. Upon receiving the registration notification, processor 40 executes a registration completion notification (Step S 13). Specifically, processor 40 causes a message to be displayed on display device 48, the message showing that the registration has been completed. The player is thus able to know that card 28 s/he is using has been registered.

On the other hand, when it is determined in the determination performed in Step S4 that received content is individual information, processor 40 proceeds to Step S9 to store the individual information in its memory. The memory can be a volatile memory such as RAM (random access memory). The individual information can contain a course data set in addition to a game history.

Processor 40 executes a game program while referring to the individual information (Step S10). When a player selects an expert mode, processor 40 reads from storage 42 a series of music piece data specified by the course data set. The read music piece data is D/A converted to be supplied as electric signals to speaker 50. As a result, game device 18 is enabled to play music pieces edited in advance by a player.

Upon the completion of a game, processor 40 transmits to host server 12 a completion notification containing a game history (Step S11), and deletes the individual information from its memory (Step S12).

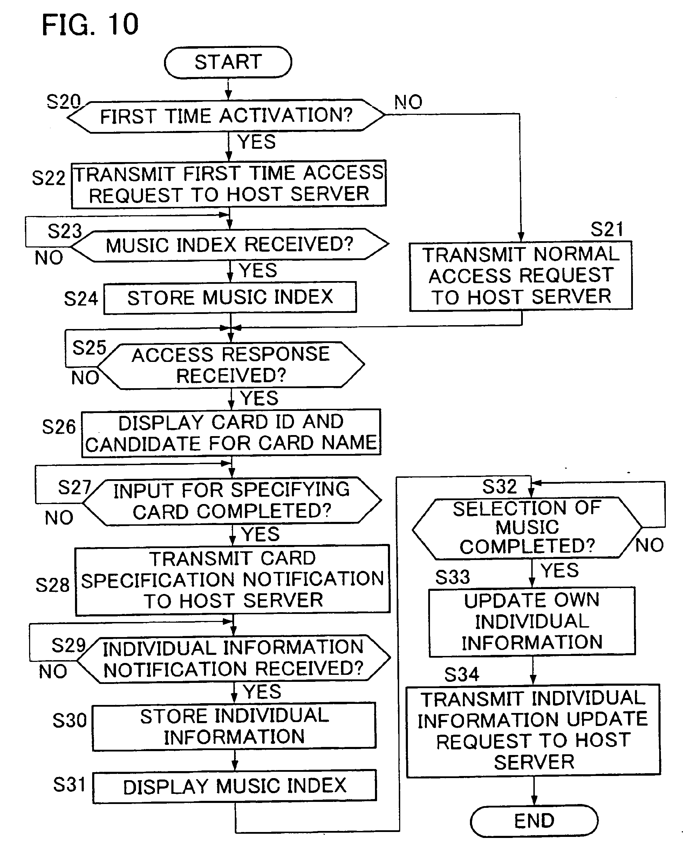

Fig. 10 is a flowchart showing procedures of the application program executed at MS 26. The processor of MS 26 first determines whether the application program is activated for the first time (Step S20). The determination as to whether the program is activated for the first time can be made, for example, by referring to a first-time flag that is set, in the application program, and the first-time flag is to be deleted when the program is activated again.

The determination condition of Step 20 is satisfied if the activation is made for the first time, and the processor proceeds to Step S22. In Step S22, the processor transmits to host server 12 a first time access request. The first time access request contains a request for transmitting in return a music index. The processor then determines whether it has received the music index (Step S23), and repeats the determination until the music index is received. Upon receiving the music index, the processor stores in a non-volatile memory the received music index (Step S24).

On the other hand, the determination condition of Step S20 is not satisfied if the activation is made for the second or more times, and the processor proceeds to Step S21. In Step S21, the processor transmits a normal access request to host server 12.

When a process of Step S21 or Step S24 is completed, the processor determines whether it has received an access response (Step S25), and repeats the process until the access response is received. Upon receiving the access response, the processor, as an action in accordance with the application program, causes a card ID and a candidate(s) for a card name contained in the access response to be displayed on the display, prompting a player to specify a card (Step S26).

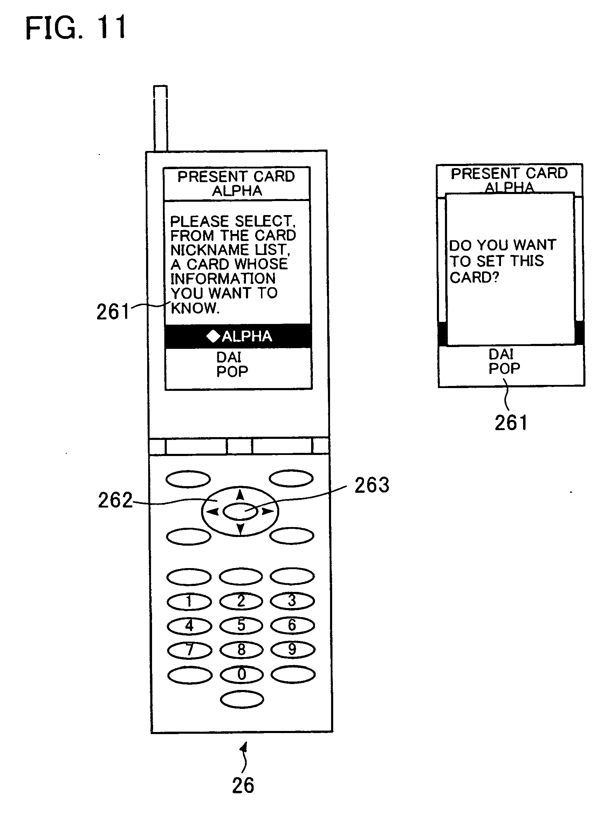

Fig. 11 shows an example screen for selecting a card from a candidate(s). As shown in the figure, there are displayed on display 261 candidates for a card name. In the example, "ALPHA", "DAI", and "POP" are displayed as candidates. One of the card names that is presently focused is highlighted or shown in another color, and the focused card name is displayed on top of display 261, where "focused" indicates a state in which a focused name is selected if confirmation is given by a user. In the shown example, "ALPHA" is presently focused. A player operates a multi-cursor key 262 to select another candidate for a card name to change the focused card name (to move the highlight or the color). When an enter button 263 is pressed down, a screen for prompting confirmation by a user is displayed. For example, when enter button 263 is pressed down while a screen as shown in the left side of Fig. 11 is displayed, a screen shown in the right side of Fig. 11 is displayed on display 261, the latter screen asking a user whether the card "ALPHA" can be conclusively selected. When enter button 263 is pressed down again to confirm the present state, the process of specifying a card is completed.

After Step S26, the processor determines whether the input for specifying a card is completed (Step S27). This determination is repeated until an input is made by a player to specify a card by operating an input button. When the player specifies a card, the processor transmits a card specification notification to host server 12 (Step S28). The processor then determines whether it has received an individual information notification (Step S29). When an individual information notification is received from host server 12, the processor stores the individual information in its memory.

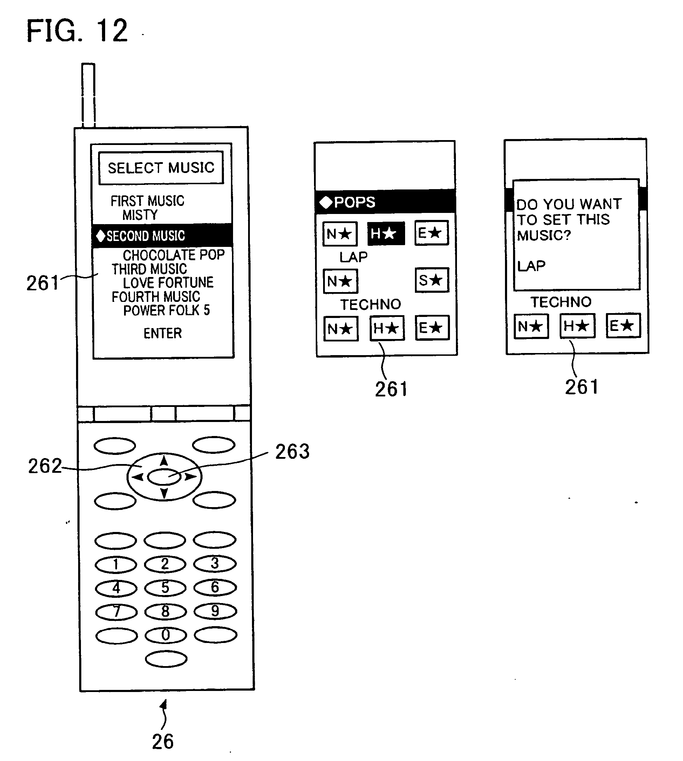

Subsequently, the processor reads, as an action of the application program, the music index stored in Step S24 to display the index on its display (Step S31). Fig. 12 shows an example screen for editing a course. A basic screen of the course editing is such as shown in the left side of Fig. 12. In this example, names of music pieces, including first, second, third, and fourth pieces, are displayed. A sequence number of a presently focused music is highlighted or shown in another color. Another sequence number of a music piece can be focused (the highlight or the color is moved) if the player operates multi-cursor key 262 so as to move up and down. For example, the second piece is being focused in the state shown in the figure, but the third piece is focused if a downward arrow of multi-cursor key 262 is pressed down.

Further, when multi-cursor key 262 is operated to right and left, a screen changes to one for selecting music piece(s) as shown in the middle portion of Fig. 12. There are shown, in the screen for selecting music pieces, music pieces are classified into different genres, and names of a plurality of music pieces are displayed for each of the genres. In this example, classifications such as Pops, Lap, and Techno-pop are shown. A presently focused genre and a name of music piece are highlighted or shown in another color. A focused genre can be changed by moving multi-cursor key 262 up and down, and a focused name of a music piece can be changed by moving multi-cursor key 262 left and right. There are shown in the screen only a few music pieces (N*, H*, etc.), but other names of music pieces can be displayed if the screen is scrolled using multi-cursor key 262.

A focused name of a music piece is conclusively selected by pressing down enter button 263. A confirmation screen such as shown in the right side of Fig. 12 is then displayed, the screen prompting a confirmation by a user. When enter button 263 is again pressed down in this stage, a specified name of a music piece is set to a specified sequence number, so that display 261 returns to the basic screen. A course data set specifying an order and names of music pieces is generated when enter button 263 is pressed down in a state where the basic screen is displayed.

After Step S31, the processor determines whether the selection of music pieces constituting a course is finished (Step S32). When the player finishes selecting music pieces, the processor proceeds to Step S33, and generates a course data set specifying music pieces constituting a course. The processor then updates individual information including a course data set (Step S33). Specifically, a part of individual information stored in the memory is updated with a new course data set. The processor then transmits to host server 12 an individual-information-update request (Step S34).

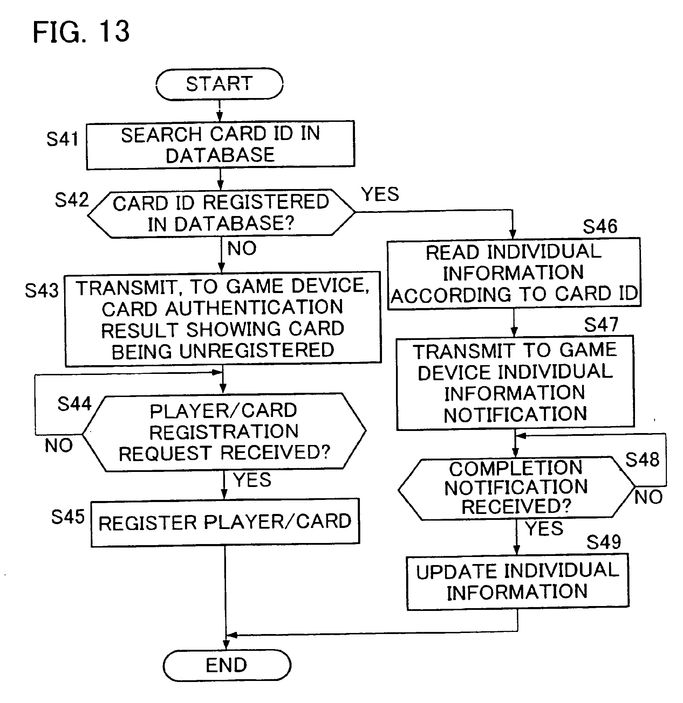

Fig. 13 is a flowchart showing a procedure executed by host server 12. Processor 30 of host server 12, upon receiving a card authentication request, accesses a database and searches for a card ID (Step S41). Subsequently, processor 30 determines, based on a result of the search, whether the card ID exists in the database (Step S42). In a case that the card ID is not registered in the database, processor 30 transmits to game device 18 a card authentication result showing that the card is unregistered (Step S43). Game device 18 then will find that the inserted card 28 is unregistered. In this case, game device 18 transmits to host server 12 a player/card registration request containing registration items.

Processor 30 then determines whether the player/card registration request is received (Step S44), and executes player/card registration when the player/card registration request is received (Step S45). In this process, processor 30 registers in the database the card ID and the player ID in association with each other.

On the other hand, when the card ID exists in the database, a condition of Step S42 is satisfied. In this case, processor 30 reads from the database individual information corresponding to the ID card (Step S46). Processor 30 subsequently generates an individual information notification containing the read individual information, for transmission to game device 18 (Step S47). Game device 18 executes a game program by referring to a course data set contained in the individual information, and a completion notification containing a result to host server 12.

Processor 30 determines whether a completion notification is received (Step S48), and repeats the determination until a completion notification is received. When the completion notification is received, processor 30 registers, in the database, individual information contained in the completion notification to update the individual information (Step S49).

### 2. Second Embodiment

Description will be next given of a game server system 10 according to a second embodiment of the present invention. Game server system 10 of the second embodiment differs from that of the first embodiment in that host server 12 and web server 14 executes the course editing process in cooperation with each other, instead of downloading the application program to MS 26. As described above, MS 26 is capable of reproducing, on its display, an image provided from web server 14 but not capable of directly displaying on its display information provided from host server 12. Thus, in the operation described in the following, web server 14, based on a signal transmitted from host server 12, generates a signal causing a screen such as a menu screen to be displayed on the display of MS 26, to transmit the generated signal to MS 26.

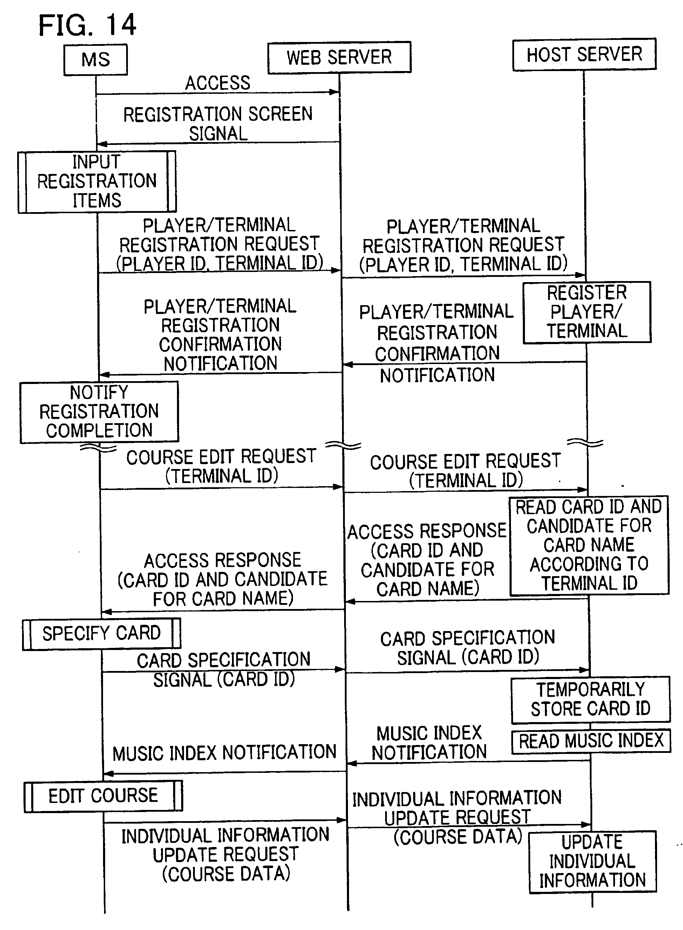

Fig. 14 is a procedure showing a game system 10 according to the game server system 10 of the second embodiment. When MS 26 first accesses to web server 14, a registration screen signal is transmitted from web server 14 to MS 26. MS 26 displays, based on the registration screen signal, a registration screen prompting the player to input registration items. The registration screen contains, for example, a dialogue box for entering a player ID.

When the player has finished entering registration items by operating an input button of MS 26, MS 26 transmits, to web server 14, a player/terminal registration request (information-processing-device-registration request). Web server 14 redirects the player/terminal registration request to host server 12. Host server 12 registers in the database a player ID and a terminal ID in association with each other, the player ID and the terminal ID being contained in the player/terminal registration request.

Host server 12 transmits a player/terminal-registration-confirmation notification to web server 14, and web server 14 transmits to MS 26 a player/terminal-registration-confirmation notification containing image data that can be displayed on MS 26. MS 26, upon receiving the player/terminal-registration-confirmation notification, causes a registration completion notification to be displayed on its display. The player then is able to know that various services can now be received using MS 26.

The player then operates MS 26 to access a web page for a music game and to select the course editing of the expert mode. In this case, MS 26 transmits a course edit request to host server 12 via web server 14. The course edit request contains a terminal ID.

Host server 12 then refers to the database stored in storage 32 to read a card ID corresponding to the terminal ID contained in the access request and a candidate for a card name. In a case that more than one card IDs and card names are associated with one terminal ID, all of the card IDs and card names are read as candidates.

Host server 12 generates an access response containing the read card ID(s) and candidate(s) for a card name, for transmission to web server 14. Web server 14 in response generates an access response containing an image data of a menu that can be displayed on the display of MS 26, for transmission to MS 26. MS 26, upon receiving the access response, executes the card specification process. In the process, MS 26 displays on its display, a plurality of card names contained in the access response, to prompt the player to select one of the card names. When the player specifies a card name by operating an input button, MS 26 transmits a card specification signal via web server 14 to host server 12.

Host server 12, upon receiving the card specification signal, temporarily stores a card ID contained therein and subsequently reads a music index. Host server 12 transmits to web server 14 a music index notification containing the music index. Web server 14, upon receiving the notification, generates a music index notification containing image data that causes a menu screen displayed on a display of MS 26, for transmission to MS 26. It is to be noted that a music index of the same type may be stored in advance in web server 14. In this case, web server 14, upon receiving a card specification signal, transmits a music index notification to MS 26. Communication resources can then be saved since communication between web server 14 and host server 12 is omitted.

MS 26, upon receiving a music index notification, displays the music index on its display. However, since MS 26's display is not large enough, a number of music pieces displayable in a display area is limited. A player is then caused to select a desired music piece by scrolling the screen. There is also a limit in a data amount receivable at MS 26 in one communication session, and therefore, a music index fitted to a single page is transmitted in one communication session, which means that communication needs to be performed every time there is a move to a next page. For this reason, the course editing performed via web server 14 is suited for a case where a music index contains a small number of music pieces. Nevertheless, a number of music pieces will not cause any problem in a wireless communication network capable of transmitting a large amount of data.

When the course editing by the player is finished, MS 26 generates an individual-information-update request containing a course data set, for transmission via web server 14 to host server 12. Host server 12, upon receiving the individual-information-update request, updates details of the database in accordance with individual information contained therein. The player is thus able to use MS26 to complete the editing of a course before proceeding to a game arcade.

The present invention has been described so far in relation to embodiments considered at the time of filing an application to be most practical and preferable. However, the present invention is not limited to those set forth in embodiments disclosed herein, and can be modified as appropriate within a range not departing from the following claims and the specification. Accordingly, the technical scope of the present invention should be construed to encompass a game system, a game element providing method, a game device and a program product with such modifications.

## Claims

1. A game server system (12, 14) capable of communicating with a plurality of game devices (18), and capable of transmitting, individually to said game devices (18), element-specifying information specifying game elements for use by said game devices (18) to execute games, the game server system being capable of communicating with a plurality of information processing devices (26),
the game server system (12, 14) comprising:
a storage (32) that stores player identifiers corresponding respectively to game players who will use said game devices (18), said storage (32) being adapted to store a player identifier of a game player and one or more recording-medium identifiers used by the game player, in association with each other, said recording-medium identifiers each identifying one of one or more portable recording media (28) for use at one of said game devices when the game player plays a game at said one of said game devices, wherein different recording-medium identifiers are assigned to different recording media;
a recording medium registrar (30) for, upon receiving a recording-medium identifier and a player identifier from one of said game devices (18), storing the recording-medium identifier in association with the player identifier in the storage (32);
an information-processing-device registrar (30) for, upon receiving, from one of said information processing devices (26), an information-processing-device registration request containing an information-processing-device identifier unique to said one of the information processing devices (26) and a player identifier, storing in said storage (32) said received information-processing-device identifier and said player identifier in association with each other;
an element-specifying-information registrar (30) for, upon receiving from said one of said information processing devices (26), element-specifying information edited using said one of said information processing devices (26) together with a recording-medium identifier, storing the element-specifying information in said storage (32) in association with the information-processing-device identifier of said one of said information processing devices (26) which has been stored in the storage (32), the received recording-medium identifier, and a player identifier associated with the recording-medium identifier; and
an element-specifying-information supplier (30) for, upon receiving a recording-medium identifier from one of said game devices (18), reading from said storage (32) element-specifying information associated with said received recording-medium identifier, and transmitting the element-specifying information to said one of said game devices (18), so as to enable said one of said game devices (18) to execute a game using a game element specified by said element-specifying information;
wherein the game devices are arcade game devices of a game arcade and have a reader (52) for reading the recording-medium identifier and a notifier (40, 44) that notifies, via a communication network (16), said game server system (12, 14) of the recording-medium identifier read by said reader (52); and
wherein the information processing devices (26) are mobile communication terminals and are not part of the game arcade.

2. The game server system (12, 14) of Claim 1,
wherein the game server system (12, 14) further comprises a recording medium-identifier-candidate presenter (30) for, upon receiving an access request indicating an information-processing-device identifier from one of said information processing devices (26), with its information-processing-device identifier having been stored in said storage (32) by said one information-processing-device registrar, transmitting, to said one information processing device (26), one or more recording medium identifiers associated with said information-processing-device identifier;
wherein said element-specifying-information registrar (30), upon receiving, from one of said information processing devices (26), a recording-medium-specification notification and element-specifying information, is adapted to store said element-specifying information in association with a recording-medium identifier being selected from among said one or more recording-medium identifiers notified by said recording medium-identifier-candidate presenter (30) and being specified in said recording medium-specification notification; and
wherein said element-specifying-information supplier, upon receiving from one of said game devices (18) a recording-medium identifier of a portable recording medium (28), is adapted to transmit to said one of said game devices (18) element-specifying information associated with said recording-medium identifier, said recording-medium identifier being read by said one of said game devices (18) before a game player plays a game at said one of said game devices (18).

3. The game server system (12, 14) of Claim 1 or 2, further comprising an element candidate provider (30) for providing, in response to a request received from one of said information processing devices (26), to said one of said information processing devices (26), element-candidate-specifying information specifying candidates for game elements to be selected by a game player.

4. A game element providing method for use in a game server system (12, 14) capable of communicating with a plurality of game devices (18) to transmit, individually to said game devices (18), element-specifying information specifying game elements used by said game devices (18) in executing games,
wherein the game server system (12, 14) has a storage (32) for storing a player identifier of a game player and one or more recording-medium identifiers used by the game player, in association with each other, the recording-medium identifiers each identifying one of one or more portable recording media (28) for use at one of said game devices when the game player plays a game at said one game device, wherein different recording-medium identifiers are assigned to different recording media, and
wherein the game devices are arcade game devices of a game arcade and have a reader (52) that reads a recording-medium identifier, and a notifier (40, 44) that notifies, via a communication network (16), said game server system (12, 14) of the recording-medium identifier read by said reader (52),
said method comprising:
communicating with a plurality of information processing devices (26), wherein the information processing devices are mobile communication terminals and are not part of the game arcade;
receiving, from one of said game devices (18), a recording-medium identifier and a player identifier;
storing in the storage (32) the received recording-medium identifier in association with the player identifier;
receiving, from one of said information processing devices (26), an information-processing-device-registration request indicating an information processing-device identifier unique to said one of said information processing devices (26) and one of said player identifiers;
storing in said storage (32) said information-processing-device identifier and said player identifier indicated by said information-processing-device registration request, in association with each other;
receiving, from one of said information processing devices (26), element-specifying information edited using said one of said information processing devices (26) together with a recording-medium identifier, wherein an information-processing-device identifier of said one of said information processing devices (26) has been stored in said storage (32);
storing in said storage (32) said element-specifying information received from said one of said information processing devices (26) in association with said information processing-device identifier of said one of said information processing devices (26), the received recording-medium identifier, and a player identifier associated with the recording-medium identifier; and
reading, from said storage (32), element-specifying information associated with a recording medium identifier received from one of said game devices (18), for transmission to said one of said game devices (18), so as to enable said one of said game devices (18) to execute a game using a game element specified by said element-specifying information.

## Patentansprüche

1. Spielserversystem (12, 14), das imstande ist, mit einer Mehrzahl von Spielgeräten (18) zu kommunizieren und das imstande ist, individuell zu den Spielgeräten (18) elementspezifizierende Information zu übertragen, die Spielelemente für die Verwendung durch die Spielgeräte (18) für die Ausführung von Spielen spezifiziert, wobei das Spielserversystem imstande ist, mit einer Mehrzahl von informationsverarbeitenden Geräten (26) zu kommunizieren,
wobei das Spielserversystem (12, 14) aufweist:
einen Speicher (32), der Spieleridentifizierer speichert, die jeweils den Spiel-Spielern entsprechen, die die Spielgeräte (18) benutzen werden, wobei der Speicher (32) dazu ausgelegt ist, einen Spieler-Identifizierer eines Spielers sowie einen oder mehrere Aufzeichnungsmedium-Identifizierer, die durch den Spieler benutzt werden, in gegenseitiger Verknüpfung zu speichern, wobei die Aufzeichnungsmedium-Identifizierer jeweils eines von einem oder mehreren tragbaren Aufzeichnungsmedien (28) für die Benutzung bei einem der Spielgeräte identifizieren, wenn der Spieler ein Spiel an dem besagten einen der Spielgeräte spielt, wobei unterschiedliche Aufzeichnungsmedium-Identifizierer zu unterschiedlichen Aufzeichnungsmedien zugeordnet sind;
einen Aufzeichnungsmedium-Registrierer (30) für die Speicherung, auf den Empfang eines Aufzeichnungsmedium-Identifizierers und eines Spieler-Identifizierers von einem der Spielgeräte (18) hin, des Aufzeichnungsmedium-Identifizierers in Verknüpfung mit dem Spieler-Identifizierer in dem Speicher (32);
einen Informationverarbeitungsgerät-Registrierer (30) für die Speicherung, auf den Empfang, von einem der informationsverarbeitenden Geräte (26), einer Informationsverarbeitungs-Registrierungsanforderung, die einen Informationsverarbeitungsgerät-Identifizierer enthält, der einzigartig für das besagte eine der Informationsverarbeitungsgeräte (26) ist, und eines Spieleridentifizierers hin, des empfangenen Informationsverarbeitungsgerät-Identifizierers und des Spieler-Identifizierers in gegenseitiger Zuordnung in dem Speicher (32);
einen elementspezifizierenden Informationsregistrierer (30) für die Speicherung, auf den Empfang, von dem besagten einen der Informationsverarbeitungsgeräte (26), von elementspezifizierender Information, die unter Verwendung des besagten einen der Informationsverarbeitungsgeräte (26) editiert ist, zusammen mit einem Aufzeichnungsmediumidentifizierer hin, der elementspezifizierenden Information in dem Speicher (32) in Verknüpfung mit dem Informationsverarbeitungsgerät-Identifizierer von dem besagten einen der Informationsverarbeitungsgeräte (26), der in dem Speicher (32) gespeichert worden ist, dem empfangenen Aufzeichnungsmedium-Identifizierer und einem Spieler-Identifizierer, der mit dem Aufzeichnungsmedium-Identifizierer verknüpft ist; und
einen elementspezifizierenden Informationszuführer (30) für das Lesen, auf den Empfang eines Aufzeichnungsmedium-Identifzierers von einem der Spielgeräte (18) hin, von elementspezifizierender Information, die mit dem empfangenen Aufzeichnungsmedium-Identifizierer verknüpft ist, aus dem Speicher (32), und für die Übertragung der elementspezifizierenden Information zu dem besagten einen der Spielgeräte (18), um hierdurch das besagte eine der Spielgeräte (18) imstande zu setzen, ein Spiel unter Verwendung eines Spielelements auszuführen, das durch die elementspezifizierende Information spezifiziert ist;
wobei die Spielgeräte Arcade-Spielgeräte einer Spiel-Arcade sind und einen Leser (52) für das Lesen des Aufzeichnungsmedium-Identifizierers sowie einen Benachrichtiger (40, 44) aufweisen, der das Spielserversystem (12, 14) über ein Kommunikationsnetzwerk (16) über den Aufzeichnungsmedium-Identifizierer informiert, der durch den Leser (52) zu lesen ist; und
wobei die Informationsverarbeitung kein Teil der Spiel-Arcade ist.

2. Das Spielserversystem (12, 14) nach Anspruch 1,
wobei das Spielserversystem (12, 14) weiterhin einen Aufzeichnungsmedium-Identifizierer-Kandidat-Präsentierer (30) für die Übertragung, bei Empfang einer Zugangsanforderung, die einen Informationsverarbeitungsgerät-Identifizierer von einem der Informationsverarbeitungsgeräte (26) enthält, dessen Informationsverarbeitungsgerät-Identifizierer in dem Speicher (32) durch den besagten einen Informationsverarbeitungsgerät-Registrierer gespeichert worden ist, von einem oder mehreren Aufzeichnungsmedium-Identifizierer, die mit dem Informationsverarbeitungsgerät-Identifizierer verknüpft sind, zu dem besagten einen Informationsverarbeitungsgerät (26) aufweist;
wobei der elementspezifische Informationsregistrierer (30) auf den Empfang einer Aufzeichnungsmediumspezifikationsbenachrichtigung und von elementspezifizierender Information von einem der Informationsverarbeitungsgeräte (26) hin, dazu ausgelegt ist, die elementspezifizierende Information in Verknüpfung mit einem Aufzeichnungsmedium-Identifizierer zu speichern, der unter dem einen oder den mehreren Informationsmedium-Identifizierern ausgewählt ist, die durch den Aufzeichnungsmediumidentifizierer-Kandidat-Präsentierer (30) mitgeteilt wurden, und der in der Aufzeichnungsmediumspezifikationsmitteilung spezifiziert ist; und
wobei der elementspezifizierende Informationszuführer auf den Empfang eines Aufzeichnungsmedium-Identifizierers eines tragbaren Aufzeichnungsmediums (28) von einem der Spielgeräte (18) hin dazu ausgelegt ist, zu dem besagten einen der Spielgeräte (18) elementespezifizierende Information zu übertragen, die mit dem Aufzeichnungsmedium-Identifizierer verknüpft ist, wobei der Aufzeichnungsmedium-Identifizierer durch das besagte eine der Spielgeräte (18) gelesen wird, bevor ein Spieler ein Spiel an dem besagten einen der Spielgeräte (18) spielt.

3. Spielserversystem (12, 14) nach Anspruch 1 oder 2, das weiterhin einen Elementkandidatenbereitsteller (30) für die Bereitstellung, auf den Empfang einer Anforderung von einem der informationsverarbeitenden Geräte (26) hin, von elementkandidatenspezifizierender Information zu dem besagten einen der Informationsverarbeitungsgeräte (26), wobei die elementkandidatenspezifizierende Information Kandidaten für Spielelemente spezifiziert, die von einem Spieler auszuwählen sind.

4. Spielelementbereitstellungsverfahren für die Verwendung in einem Spielserversystem (12, 14), das imstande ist, mit einer Mehrzahl von Spielgeräten (18) zu kommunizieren, um individuell zu den Spielgeräten (18) elementspezifizierende Information zu übertragen, die Spielelemente spezifiziert, die von den Spielgeräten (18) bei der Abarbeitung von Spielen benutzt werden,
wobei das Spielserversystem (12, 14) einen Speicher (32) für die Speicherung eines Spieler-Identifizierers eines Spielers sowie von einem oder mehreren Aufzeichnugsmedium-Identifizierern, die durch den Spieler zu benutzen sind, in gegenseitiger Verknüpfung aufweist, wobei die Auzeichnungsmedium-Identifizierer jeweils eines von einem oder mehreren tragbaren Aufzeichnungsmedien (28) für die Benutzung bei einem der Spielgeräte identifizieren, wenn der Spieler ein Spiel an dem besagten einen Spielgerät spielt, wobei unterschiedliche Aufzeichnungsmedien-Identifizierer zu unterschiedlichen Aufzeichnungsmedien zugeordnet sind, und
wobei die Spielgeräte Arcade-Spielgeräte einer Spiel-Arcade sind und einen Leser (52) aufweisen, der einen Aufzeichnungsmedium-Identifizierer liest, sowie einen Benachrichtiger (40, 44) aufweisen, der das Spielserversystem (12, 14) über ein Kommunikationsnetzwerk (16) über den Aufzeichnungsmedium-Identifizierer benachrichtigt, der durch den Leser (52) gelesen worden ist,
wobei das Verfahren umfasst:
Kommunizieren mit einer Mehrzahl von informationsverarbeitenden Geräten (26), wobei die informationsverarbeitenden Geräte bewegliche Kommunikationsterminals sind und keinen Teil der Spiel-Arcade darstellen;
Empfangen eines Aufzeichnungsmedium-Identifizierers und eines Spieler-Identifizierers von einem der Spielgeräte (18);
Speichern des empfangenen Aufzeichnungsmedium-Identifizierers unter Verknüpfung mit dem Spieler-Identifizierer in dem Speicher (32);
Empfangen einer Informationsverarbeitungsgerätregistrierungsanforderung von einem der Informationsverarbeitungsgeräte (26), wobei die Informationsverarbeitungsgerätregistrierungsanforderung einen Informationsverarbeitungsgerät-Identifizierer angibt, der einzigartig für das besagte eine der Informationsverarbeitungsgeräte (26) ist, und das einen der Spieler-Identifizierer angibt;
Speichern des Informationsverarbeitungsgerät-Identifizierers und des Spieler-Identifiziers, die durch die besagte Informationsverarbeitungsgeräte-Registrierungsanforderung bezeichnet sind, in dem Speicher (32) in gegenseitiger Zuordnung;
Empfangen einer elementspezifizierenden Information, die unter Verwendung des besagten einen der Informationsverarbeitungsgeräte (26) editiert ist, zusammen mit einem Aufzeichnungsmediumidentifizierer von einem der besagten Informationsverarbeitungsgeräte (26), wobei ein Informationsverarbeitungsgerät-Identifizierer des besagten einen der Informationsverarbeitungsgeräte (26) in dem Speicher (32) gespeichert worden ist;
Speichern, in dem Speicher (32), der elementspezifizierenden Information, die von dem besagten einen der Informationsverarbeitungsgeräte (26) empfangen ist, unter Verknüpfung mit dem Informationsverarbeitungsgerät-Identifizierer des besagten einen der Informationsverarbeitungsgeräte (26), des empfangenen Aufzeichnungsmedium-Identifizierers und eines Spieler-Identifizierers, der mit dem Aufzeichnungsmedium-Identifizierer verknüpft ist; und
Lesen einer elementspezifizierenden Information aus dem Speicher (32), die mit einem Aufzeichnungsmedium-Identifizierer verknüpft ist, der von einem der Spielgeräte (18) empfangen worden ist, für die Übertragung zu dem besagten einen der Spielgeräte (18), um das besagte eine der Spielgeräte (18) dazu imstande zu setzen, ein Spiel unter Verwendung eines Spielelements auszuführen, das durch die elementspezifizierende Information spezifiziert ist.

## Revendications

1. Système de serveur de jeux (12, 14) pouvant communiquer avec une pluralité de dispositifs de jeu (18), et pouvant transmettre individuellement auxdits dispositifs de jeu (18), des informations de spécification d'éléments spécifiant des éléments de jeux destinés à être utilisés (18) par lesdits dispositifs de jeu (18) pour exécuter des jeux, le système de serveur de jeux pouvant communiquer avec une pluralité de dispositifs de traitement d'information (26),
le système de serveur de jeux (12, 14) comprenant :
une mémoire (32) qui stocke des identifiants de joueurs correspondants respectivement à des joueurs de jeu qui utiliseront lesdits dispositifs de jeu (18), ladite mémoire (32) étant adaptée pour stocker un identifiant de joueur d'un joueur de jeu et un ou plusieurs identifiants de support d'enregistrement utilisé par le joueur de jeu, en association les uns avec les autres, lesdits identifiants de support d'enregistrement identifiant chacun l'un d'un ou plusieurs supports d'enregistrement portable (28) pour une utilisation au niveau de l'un desdits dispositifs de jeu lorsque le joueur de jeu joue à un jeu au niveau d'un desdits dispositifs de jeu, dans lequel différents identifiants de support d'enregistrement sont attribués à différents supports d'enregistrement ;
un registraire de support d'enregistrement (30) pour, lors de la réception d'un identifiant de support d'enregistrement et d'un identifiant de joueur en provenance de l'un desdits dispositifs de jeu (18), stocker l'identifiant de support d'enregistrement en association avec l'identifiant de joueur dans la mémoire (32) ;
un registraire de dispositif de traitement (30) pour, lors de la réception, en provenance de l'un desdits dispositifs de traitement d'information (26), d'une demande d'enregistrement de dispositif de traitement d'information contenant un identifiant de dispositif de traitement d'information propre audit un des dispositifs de traitement d'information (26) et un identifiant de joueur, stocker dans ladite mémoire (32) ledit identifiant de dispositif de traitement d'information reçu et ledit identifiant de joueur en association l'un avec l'autre ;
un registraire d'information de spécification d'éléments (30) pour, lors de la réception, en provenance dudit un desdits dispositifs de traitement d'information (26), d'informations de spécification d'éléments éditées en utilisant ledit un desdits dispositifs de traitement d'information (26) conjointement avec un identifiant de support d'enregistrement, stocker les informations de spécification d'éléments dans ladite mémoire (32) en association avec l'identifiant de dispositif de traitement d'information dudit un desdits dispositifs de traitement d'information (26) qui a été stocké dans la mémoire (32), l'identifiant de support d'enregistrement reçu, et un identifiant de joueur associé à l'identifiant de support d'enregistrement ; et
un fournisseur d'information de spécification d'éléments (30) pour, lors de la réception d'un identifiant de support d'enregistrement en provenance de l'un desdits dispositifs de jeu (18), lire dans ladite mémoire (32) des informations de spécification d'éléments associées audit identifiant de support d'enregistrement reçu, et transmettre les informations de spécification d'éléments audit un desdits dispositifs de jeu (18), de façon à permettre audit un desdits dispositifs de jeu (18) d'exécuter un jeu en utilisant un élément de jeu spécifié par lesdites informations de spécification d'éléments ;
dans lequel les dispositifs de jeu sont des dispositifs de jeu d'arcade d'une salle de jeux et ont un lecteur (52) pour lire l'identifiant de support d'enregistrement et un dispositif de notification (40, 44) qui notifie via un réseau de communication (16), audit système de serveur de jeux (12, 14) l'identifiant de support d'enregistrement lu par ledit lecteur (52) ; et
dans lequel les dispositifs de traitement d'information (26) sont des terminaux de communication mobiles et ne font pas partie de la salle de jeux.

2. Système de serveur de jeux (12, 14) selon la revendication 1,
dans lequel le système de serveur de jeux (12, 14) comprend en outre un dispositif de présentation d'identifiant de support d'enregistrement candidat (30) pour, lors de la réception d'une demande d'accès indiquant un identifiant de dispositif de traitement d'information en provenance de l'un desdits dispositifs de traitement d'information (26), son identifiant de dispositif de traitement d'information ayant été stocké dans ladite mémoire (32) par ledit un registraire de dispositif de traitement d'information, transmettre audit un dispositif de traitement d'information (26) un ou plusieurs identifiants de support d'enregistrement associés audit identifiant de dispositif de traitement d'information ;
dans lequel ledit registraire d'information de spécification d'éléments (30), lors de la réception, en provenance de l'un desdits dispositifs de traitement d'information (26), d'une notification de spécification de support d'enregistrement et des informations de spécification d'éléments, est adapté pour stocker lesdites informations de spécification d'éléments en association avec un identifiant de support d'enregistrement étant choisi parmi lesdits un ou plusieurs identifiants de support d'enregistrement notifiés par ledit dispositif de présentation d'identifiant de support d'enregistrement candidat (30) et étant spécifiés dans ladite notification de spécification de support d'enregistrement ; et
dans lequel ledit fournisseur d'information de spécification d'éléments, lors de la réception en provenance de l'un desdits dispositifs de jeu (18) d'un identifiant de support d'enregistrement d'un support d'enregistrement portable (28), est adapté pour transmettre audit un desdits dispositifs de jeu (18) des informations de spécification d'éléments associées audit identifiant de support d'enregistrement, ledit identifiant de support d'enregistrement étant lu par ledit un desdits dispositifs de jeu (18) avant qu'un joueur de jeux joue à un jeu avec ledit un desdits dispositifs de jeu.

3. Système de serveur de jeux (12, 14) selon la revendication 1 ou 2, comprenant en outre un fournisseur d'élément candidat (30) pour fournir, en réponse à une demande reçue en provenance de l'un desdits dispositifs de traitement d'information (26), audit un desdits dispositifs de traitement d'information (26), des informations de spécification d'éléments candidat spécifiant des candidats pour les éléments de jeux devant être sélectionnés par un joueur du jeu.

4. Procédé de fourniture d'élément de jeux à utiliser dans un système de serveur de jeux (12, 14) pouvant communiquer avec une pluralité de dispositifs de jeu (18) pour transmettre individuellement auxdits dispositifs de jeu (18), des informations de spécification d'éléments spécifiant des éléments de jeux utilisés par lesdits dispositifs de jeu (18) dans l'exécution des jeux,
dans lequel le système de serveur de jeux (12, 14) comprend une mémoire (32) pour stocker un identifiant de joueur d'un joueur de jeu et un ou plusieurs identifiants de support d'enregistrement utilisés par le joueur de jeu, en association les uns avec les autres, les identifiants de support d'enregistrement identifiant chacun un des un ou plusieurs supports d'enregistrement portables (28) à utiliser au niveau d'un desdits dispositifs de jeu lorsque le joueur de jeu joue à un jeu au niveau dudit un dispositif de jeux, dans lequel différents identifiants de support d'enregistrement sont attribués à différents supports d'enregistrement, et
dans lequel les dispositifs de jeu sont des dispositifs de jeu d'arcade d'une salle de jeux et ont un lecteur (52) qui lit un identifiant de support d'enregistrement, et un dispositif de notification (40, 44) qui notifie, via un réseau de communication (16), audit système de serveur de jeux (12, 14) l'identifiant de support d'enregistrement lu par ledit lecteur (52),
ledit procédé comprenant :
la communication avec une pluralité de dispositifs de traitement d'information (26), dans lequel les dispositifs de traitement d'information sont des terminaux de communication mobile et ne font pas partie de la salle de jeux ;
la réception, en provenance de l'un desdits dispositifs de jeu (18) d'un identifiant de support d'enregistrement et d'un identifiant de joueur ;
le stockage dans la mémoire (32) de l'identifiant de support d'enregistrement reçu en association avec l'identifiant de joueur ;
la réception, en provenance d'un desdits dispositifs de traitement d'information (26), d'une demande d'enregistrement de dispositif de traitement d'information indiquant un identifiant de dispositif de traitement d'information propre audit un desdits dispositifs de traitement d'information (26) et un desdits identifiants de joueur ;
le stockage dans ladite mémoire (32) dudit identifiant de dispositif de traitement d'information et dudit identifiant de joueur indiqués par ladite demande d'enregistrement du dispositif de traitement d'information, en association l'un avec l'autre ;
la réception, en provenance de l'un desdits dispositifs de traitement d'information (26), d'informations de spécification d'éléments éditées en utilisant ledit un desdits dispositifs de traitement d'information (26) conjointement avec un identifiant de support d'enregistrement, dans lequel un identifiant de dispositif de traitement d'information dudit un desdits dispositifs de traitement d'information (26) a été stocké dans ladite mémoire (32) ;
le stockage dans ladite mémoire (32) desdites informations de spécification d'éléments reçues en provenance dudit un desdits dispositifs de traitement d'information (26) en association avec ledit identifiant du dispositif de traitement d'information dudit un desdits dispositifs de traitement d'information (26), l'identifiant de support d'enregistrement reçu, et un identifiant de joueur associé à l'identifiant de support d'enregistrement ; et
la lecture, dans ladite mémoire (32) d'informations de spécification d'éléments associées à un identifiant de support d'enregistrement reçu en provenance de l'un desdits dispositifs de jeu (18), pour transmission audit un desdits dispositifs de jeu (18), de façon à permettre audit un desdits dispositifs de jeu (18) d'exécuter un jeu en utilisant un élément de jeux spécifié par lesdites informations de spécification d'éléments.
